# EUROPEAN PATENT APPLICATION

(11) **EP 4 447 411 A2**
(43) Date of publication of application: **16.10.2024**
(21) Application number: 24175668.3
(22) Date of filing: 15.06.2016
(51) Int. Cl.: H04L 65/70

(54) **SYSTEM, METHOD AND DEVICES FOR LOW LATENCY TRANSMISSION**

(30) Priority: 18.06.2015 IT UB20151488
(62) Divisional of application: 19214745.2
(71) Applicant: Sky Italia S.r.L., 20138 Milano (IT)
(72) Inventor: BERTOLOTTI, Massimo, 20138 Milano (IT); SONNATI, Fabio, 20138 Milano (IT)
(74) Representative: Hoffmann Eitle

(57) **Abstract**

A method id disclosed for delivering at least one content item by means of a supplying entity. The method comprises the step of supplying, to a terminal, at least one list of segments related to said at least one content, wherein said at least one list of segments comprises a segment that is being processed. Further, the method comprises the step of enabling the terminal to access said segment that is being processed, also if said segment that is being processed is not yet completely available at the supplying entity.

## Description

### TECHNICAL FIELD

The present invention relates to methods, devices, systems, computer programs and signals for the delivery of content.

### BACKGROUND OF THE INVENTION

The common http streaming protocols (such as HLS, HDS, SS and DASH) are based on breaking down a video stream into portions or segments managed as individual files, which thus require a certain amount of time in order to be processed. For example, the processing includes compression progressively performed on the content as it becomes available. This process results in the generation of a series of segments having a certain length, which when completed can be downloaded by the user for viewing. Each segment is typically closed, in the sense that it is a unit of data having start and end and can be downloaded only once it has been entirely created via common protocols such as http 1.0. The presence of these segments therefore introduces a latency due at least to the duration (and thus length) of the segment itself. By reducing the length of the segment it is possible to decrease latency in part. However, irrespective of the limits possibly imposed on the length of the segment, it is in any case difficult to control the overall latency.

There also exist techniques whereby a fragment of a segment is made available for downloading. Though this contributes to decreasing latency in part, it remains nonetheless difficult to control the overall latency. The known streaming techniques also use so-called manifests, in which the components of a video, for example the URLs of the segments into which the video was broken down, are listed. When users request to view content such as a video, they receive in response a manifest containing, for example, a URL allowing them to download one or more segments. In order to reduce latency, the manifest is typically sent as soon as possible in response to the user's request. Despite this, it is difficult to control and limit latency in content distribution or delivery systems.

### SUMMARY OF THE INVENTION

The object of the present invention is to remedy at least some of the problems tied to the known techniques and thus to improve the same.

According to a first aspect of the invention, there is provided a method for delivering at least one content item by means of a supplying entity, comprising the steps of: causing the generation (S110) of at least a first list of components related to said at least one content item at a first time instant and a second list of components related to said at least one content item at a second time instant following the first time instant; causing the reception (S120), at a supplying entity, of a request from a terminal, of a list of components related to said at least one content item at a third time instant following the first time instant; causing the sending (S130), in response to said request, of a response containing the second list of components not before a delay time, wherein the delay time is equal to the difference between the second time instant and the third time instant.

According to a second aspect of the invention, there is provided an entity (200) for supplying at least one content item to a terminal, wherein the entity (200) comprises: a generating means (210) configured to generate at least a first list of components related to said at least one content item at a first time instant and a second list of components related to said at least one content item at a second time instant following the first time instant; a reception means (200) configured to receive, from a terminal, a request for a list of components related to said at least one content item at a third time instant following the first time instant; a sending means (230) configured to send, in response to said request, a response containing the second list of components not before a delay time, wherein the delay time is equal to the difference between the second time instant and the third time instant.

According to a third aspect of the invention, there is provided a terminal (300) for using at least one content item supplied by a supplying entity, the terminal comprising: a request means (310) for sending said supplying entity a request for at least a first content; a reception means (320) for receiving a response comprising a list of components related to said content, wherein the response is received with a delay based on an interval of time between a first time instant in which the request arrives at the supplying entity and a second time instant in which the list is generated at the supplying entity, wherein the second time instant coincides with or follows the first time instant.

According to a fourth aspect of the invention, there is provided a system comprising a terminal and a supplying entity according to the second aspect described above. According to a fifth aspect of the invention, there is provided a signal for carrying a data structure comprising a response message containing a list of components related to a content item, the response message being generated in response to a message from a terminal requesting a list of components, wherein the response is generated at the supplying entity with a delay based on an interval of time between a first time instant in which the request arrives at the supplying entity and a second time instant in which the list is generated at the supplying entity.

According to a sixth aspect of the invention, there is provided processor program configured to execute, when said program is run on a computer, all the steps according to the first aspect.

According to a seventh aspect of the invention, there is provided a medium for supporting a processor program configured to execute, when said program is run on a computer, all the steps according to the first aspect.

### LIST OF FIGURES

figure 1 is a flow diagram according to one embodiment of the present invention;
figure 2 is a block diagram of a content supplying entity according to one embodiment of the present invention;
figure 3 is a block diagram of a terminal according to one embodiment of the present invention;
figure 4 is a block diagram of a system according to one embodiment of the present invention;
figure 5 is an exemplificative diagram for illustrating the exchange of messages and times between terminal and supplying entity;
figure 6 is a block diagram of a computer capable of implementing the present invention according to one embodiment;
figure 7 is a time diagram representing a set of delays according to known techniques;
figure 8 is a time diagram for illustrating the delays according to an example of the present invention; figure 9 is a block diagram illustrating an example of an entity and a terminal according to the present invention;
figure 10 is an illustrative diagram in which the operations performed by the terminal and by the supplying entity according to one example of the present invention are represented.

### DETAILED DESCRIPTION

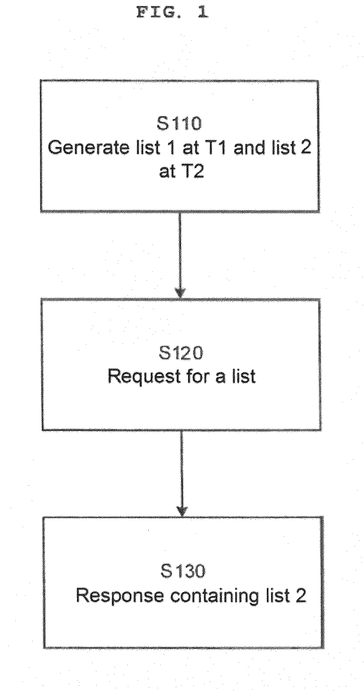

A first embodiment of the present invention will now be described with reference to figure 1, which illustrates a flow diagram relating to a method for delivering at least one content item by means of a supplying entity. One example of a supplying entity, which will be discussed further below, is a server capable of delivering content. Content means any information that can be directly or indirectly (for example, when decoding is necessary) enjoyed by the user, and therefore comprises text, audio and/or video services, data for running an application and/or data related to an application (for example, to provide a certain service, etc.), as well as any combination thereof.

The generation of at least a first list of components related to at least one content item is caused in step S110, wherein the first list is generated at a first time instant. The at least one content item refers to a content item which a terminal wants to use, for example because selected from a web page of a terminal, by an application of a terminal or because contained in a list on a server. The supplying entity is configured to supply a content item to a plurality of terminals. That is, every terminal included in the plurality of terminals can communicate with the supplying entity and request said content from it. The list of components related to the content can comprise one or more components of the content, but more typically it provides information that enables the terminal to access or download one or more parts thereof. For example, the list of at least one component comprises a list of at least one resource (or of an identifier of a resource) corresponding to the at least one component; the term component should be understood in a broad sense, not only with reference to the data representing the content itself (for example representing the frames of a video) but also with reference to a resource or the identifier thereof. Resource means any physical and/or virtual element of a computer system in which the resource is capable of delivering at least a part of the content. The resource can be specified by means of an address (for example IP) thereof or more commonly by means of a resource identifier (for example URI and/or URL). If there are a number of components, there will be a list of a number of resources or a number of resource identifiers, each corresponding to a part of the content.

The generation of a second list of components related to the same content is also caused in step S110, wherein the list is generated at a second time instant following the first time instant. The generation of a list at a given time instant, as will be illustrated in several examples below, can occur at pre-established times or upon the generation of a new component or the resource of the new component. It is noted that causing an action (on the part of an entity or device) refers to cases (non-exhaustive) in which the action is caused by an internal unit of the entity (for example a processor) or by an external device (which sends corresponding instructions).

It is further noted that the generation described above comprises making such lists available to the plurality of terminals. More specifically, and as described below, every terminal included in the plurality can request a list of components related to at least one content item and receive, in response, a list generated by the supplying entity, in particular the second list, as will be seen below. It is noted, in addition, that the generation of said lists is independent of a request of the terminal. Furthermore, the same list is made available, and can indeed be transmitted, to a multitude of terminals, also optionally at the same time, as may also be inferred from the whole of the present description.

The reception, at a supplying entity, of a request from a terminal is caused in step S120, wherein the request refers to a request for a list of components related to at least one content item. The reception is received at a third time instant following the first time instant (the first, second and third time instant all being ascribable to or measured at the supplying entity). In other words, a request sent from a terminal is received by the supplying entity at the third time instant.

The sending of a response containing the second list of components is caused in step S130, not before a certain delay time, wherein the delay time is equal to the difference between the second time instant and the third time instant. Clearly, the response is to be understood in the sense of a response or reply to the above-mentioned request. The delay time means that, even if the first list of components is already available at the second time instant (because generated at a previous time), instead of responding by sending the first list (already available) the supplying entity will delay the sending of the response until the subsequent list has been generated; at that point, it will send the list just generated, thereby enabling an alignment of the playback on the terminal side with the instants at which the new lists are generated; as will become even clearer from the examples, this allows latency to be more effectively and precisely controlled as well as reduced. The expression not before the delay time thus means that the supplying entity waits for the second list to be generated, and then sends, in response to the request for a list, a response containing the second list. The instant at which the response with the second list is sent can coincide exactly with the instant at which it is generated, although in practice there are further delays due to the processing or preparation of the response as well as other delays as required by the specific implementation. Generating the list comprises making it available to be sent to the terminal, that is, it could have been generated in advance but released (or published) at the third time instant in order to be able to be sent to the terminal.

In an optional variant of the first embodiment, the second list of components comprises at least one component still being processed. The content is logically divided into portions (each corresponding to a component), which represent units of data having a beginning and an end. In particular, a segment can be seen as a file or data structure having, precisely, a beginning and an end; in this sense, the segment is a closed unit. In the present variant, however, the component (or an identifier of a corresponding resource) is indicated or inserted in the list even though the latter has not yet been closed because still being processed. If the component is referenced, for example, by means of a URL, it will thus be possible to access the segment (not closed) and start downloading the already processed fragments (or portions); for this purpose, it could be necessary to use protocols suitable for downloading fragments of unclosed segments, for example using http 1.1 in the chunked encoding mode. If a protocol capable of managing only closed segments (such as http 1.0) were available to it, the terminal would have to wait until the component or segment has been closed in order to be able to download it. It is observed that processing means processing a start signal representing the content in order to make it available in one or more formats suitable for transmission. Therefore, the processing comprises coding and/or compressing a start signal, in order to obtain compressed segments of the start signal; in the processing, in order to make an open segment available, it is possible to process fragments (in the sense of portions) of the segment. The fragments, as will be illustrated below, can have a size that is independent of the processing unit of the coder (for example, they can be independent of the length of a GOP in the case of MPEG coding) and independent of the transmission unit used by the streaming protocol (for example, a segment).

According to a further optional variant of the present embodiment, the terminal determines a reception band on the basis of the size of at least one portion of the component being processed, wherein the size of the portion of the component is determined or provided to the terminal (provided, for example, by the supplying entity or by a distinct entity having, for example, the task of remotely configuring the terminal). The band can be estimated, for example, based on the size of the fragment and the (measured) time necessary for downloading it. An estimate of the reception band can prove useful, for example, when applying monitoring, diagnostic and/or communication techniques of the adapted bit rate (ABR) type. In the latter case, one may consider the example in which the list comprises at least two sets (or layers) of components, each set corresponding to a certain video resolution (and therefore to a certain bit rate); the terminal is capable of selecting the component from a certain set rather than another set on the basis of the band estimate; for example, from the set corresponding to the bit rate that is closest to or lower than the estimated or determined band, also taking certain margins into account. As the component is still being processed (and is in general independent of other parameters tied to coding or transmission), its size is not yet known and thus not communicated by the server. According to this variant, therefore, the length of the fragment is communicated to the terminal (or is known to the latter in some way) in such a way that by measuring the time necessary for the reception thereof it is possible to make an estimate of the band. It is noted that estimating the band can prove useful also if the list of components comprises only a set relating to a single specific resolution (in addition to the cases of monitoring or diagnostics): one may consider, for example, the case in which the terminal has two or more available communication channels; in this case, on the basis of the band estimated for a certain channel, the terminal can decide whether or not to change the communication channel. In fact, one of the optional but advantageous features of HTTP streaming is the adaptability of the streaming to band fluctuations of the client-server communication channel. The band is typically measured by the client by calculating the ratio between the size of a segment and the time necessary to download it. However, this typically requires the use of closed, i.e. complete, segments. Measuring the band with the standard systems is not reliable if (open) segments are downloaded in a manner synchronized with their creation because the download time is equal to the length of the segment even when the available band is distinctly greater than the bit rate of the segment. Therefore, the method according to this optional variant envisages that the supplying entity will manage the transmission of the segment in portions/fragments such as to enable measurement of the band notwithstanding the use of open segments.

It is noted that the component portion being processed, or more simply fragment, is independent of the logical units of the coder, where present. For example, if the coder produces a series of logical units represented by different GOPs, the size of the fragment can be selected in a manner that is wholly independent of the GOP and the length thereof. Therefore, the fragment need not necessarily contain a whole number of GOPs. This does not rule out that, according to another optional variant, the fragment could be conceived to contain exactly a whole number of GOPs - the fact remains that it could nonetheless be necessary to specify the size of the fragment if the decoder does not produce GOPs having the same size. The size or length of the fragment can be pre-established (for example, once and for all, or for a certain interval of time), or dynamically modified. Furthermore, the length of the fragment could also be specified in a range included within the fragment itself or indicated in an independent signalling message, if one wishes to create a system in which it is possible to vary the length of each fragment or a certain number of fragments as desired. It should be noted that a segment contains a portion of video having a certain duration or length, which can be fixed (for example 3 seconds) or vary from segment to segment. In other words, and according to one example, a segment contains information related to 3 seconds of images. Based on the complexity of the images contained and the compression/coding parameters, each segment will then be produced with a certain size in bytes. The size of each segment can vary (also given the same segment duration) according to the type of coding selected, the parameters thereof or the type of video. It is also conceivable to set certain coding parameters in such a way that all the segments have the same duration. When the client has downloaded the segment and plays it, each segment can thus display 3 seconds of video.

According to a further optional variant of the present embodiment, the second list of components comprises a component whose processing has been completed.

In this case, as the processing of the segment related to the component has been completed, it is possible to download the whole segment. Furthermore, again by virtue of the fact that the segment is closed, the length will be known and indicated at the time of downloading, so that it is not strictly necessary to take special steps as in the case of an open segment. According to another variant, the second list comprises both an open component and a closed component. According to a general example, each list comprises a closed component and an open component, wherein the respective list is generated at the moment in which the respective open component is made available for access or at the moment in which the processing thereof has begun.

According to a further optional variant of the present embodiment, the delay time is ignored if the third time instant falls within an interval defined by the first time instant and a predetermined threshold. In such a case, the response will comprise at least the first list of components but not the second list of components. For example, if the threshold is set at a value of one millisecond for the length of a 3-second segment, this variant envisages that in the case of requests for a list received immediately after (in the example, not more than one millisecond later) the moment in which the last list has been generated, the response will no longer be delayed until the emission or generation of the next list. On the contrary, the already available list will be supplied. The threshold in this non-limiting example of one millisecond can thus be adjusted so that the requests arriving sufficiently near a list just emitted are fulfilled without delay. In other words, the supplying entity can respond to certain requests by supplying the already available list without delaying the response until the generation of the next list. Requests received after that threshold will be managed normally, i.e. the response will be delayed until the next list is generated. This variant can be used, for example, when one wishes to realign a terminal that has for some reason lost a certain alignment.

The above-described variants can be combined with one another, as is obvious to the person skilled in the art. Furthermore, the first embodiment relates to a method according to the present invention. However, all of the foregoing considerations and variants apply to devices, such as the supplying unit or the terminal, as well as systems comprising the supplying unit and a terminal, processor programs and signals as will also be illustrated below. Should several details be omitted for the sake of brevity, it is noted that all of the observations made above equally apply to what follows below.

It is further noted that the system has been described with reference to the creation of two lists at two different time instants. However, the invention equally applies to cases in which the supplying entity generates any number N of manifests, each in respective distinct times.

In the initialization phase, i.e. at the moment in which the server starts processing the content, the system can generate a first list that will never be delivered (because a request will be fulfilled with the delay described above), or will be delivered without delay in response to a request and with only an open component inside it. Alternatively, in the initialization phase, the server can create an empty fictitious list to represent the first list discussed in figure 1.

Furthermore, it is noted that the invention can be equally applied irrespective of how a list is structured and/or the method whereby a list is requested by the terminals. According to a first example, in fact, the server generates respective lists at respective instants, each list containing a component just generated, so as to generate lists enabling the retrieval of new portions of content as they are generated. The terminal can repeatedly request a list from the server, which will respond with the aforesaid delay in order to supply the next list (which, as noted, is generated as soon as, for example, the open component starts to be processed, as soon as the resource from which the component can be downloaded is made available within the list, and/or as soon as the resource can be made public to the terminal). In this example, therefore, the terminal requests a new list at pre-established instants, or alternatively, as soon as one prepares to complete the download of a segment, and/or as soon as one prepares to play a certain segment. In a second example, on the other hand, it is conceivable to construct the list in such a way as to specify the resource related to a component N, and then specify a rule such as to enable the terminal to retrieve the subsequent components (N+i, with i>1) from respective resources obtainable on the basis of the segment N and that rule. Conventionally, for example, the terminal knows that the subsequent components will be available only at a certain instant. In such a case, the terminal will need to receive only one list, being able to determine how to download the subsequent components. This does not take away from the fact that the server must in any case update the list in respective intervals of time: in fact, a terminal B that makes a request later than a terminal A will begin to download, as a first segment for playing, a segment N+j (j>1) later in time compared to the segment N downloaded by terminal A as a first segment. Once the list is received, according to the second example, terminal A will be able to determine where (and possibly also when) to download the segments N+k (k>0) following the segment N; terminal B will know how to download the segments N+j+k starting from the segment N+j. Making reference, therefore, to the method of figure 1, terminal A will receive the list with a certain delay, until it is updated with the segment N; similarly, terminal B will receive a response with a delay that is sufficient for the generation of the second list containing the segment N+j. The rule for determining the subsequent segments can be any whatsoever: according to one example, an identifier of a resource comprising a counter is updated every T seconds or according to a pre-established time pattern, etc.

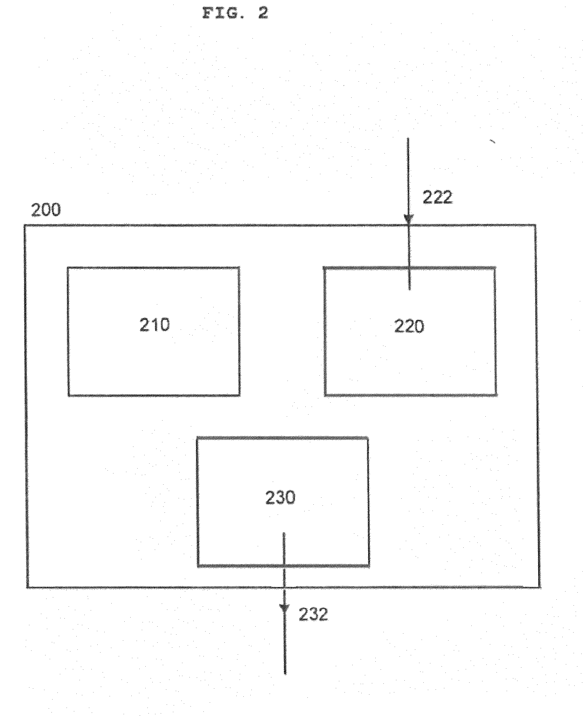

A second embodiment will now be described with reference to figure 2, which illustrates an entity supplying at least one content item and comprising a generating means 210, a reception means 220 and a sending means 230. The entity can consist in a device or, alternatively, in a set of devices interconnected to one another, and can be implemented, in particular, in hardware, software or a combination thereof, both in concentrated and distributed form, like the means included therein. Examples of a supplying entity are a server, a server farm, a software solution implemented on a cloud platform, etc.

The configuration means is configured to generate at least a first list of components and a second list of components, both related to a content item desired by a terminal (or by a user operating the terminal). The first list and the second list are such as to be generated at two distinct time instants - more specifically, at a first time instant in the case of the first list and in a second interval of time following the first interval of time in the case of the second list.

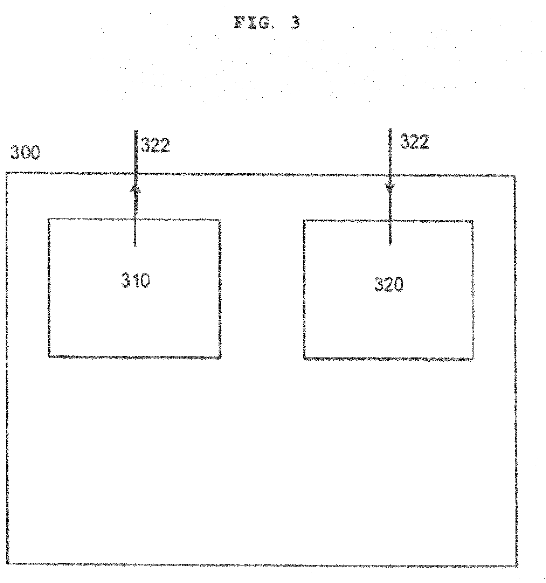

The reception means is configured to receive, from a terminal, a request relating to a list of components related to at least one content item, wherein the request is received at the entity at a third time instant following the first time instant. As mentioned above, the list can contain the components, but it preferably contains a reference to the content or an identifier of a resource from which the content can be obtained or downloaded. The sending means 230 is thus configured to send, in response to the request, a response containing the second list of components, however not before a delay time. The delay time is equal to the difference between the second time instant and the third time instant, so that the supplying entity delays the response to the request for the list until a new list is available or generated. Generating the new list comprises different cases as illustrated above, in particular generating a list comprising new components or segments as they are made available, or updating a list from which the terminal manages to establish how to obtain various components starting from a first updated component and a pre-established rule. The entity of the present embodiment can be further configured to perform all the other operations described above with reference to the first embodiment. A third embodiment will now be illustrated with reference to figure 3, which represents a terminal 300 for using at least one content item supplied by a supplying entity.

The request means 310 is configured to send the supplying entity a request for at least a first content item. The reception means 320, by contrast, is configured to receive a response from said supplying entity, wherein the response contains a list of components related to the desired content. The response is distinguished, however, by the fact that it is received with a certain delay based on an interval of time that elapses between a first time instant, at which the request arrives at the supplying entity, and a second time instant, at which the list is generated at the supplying entity (wherein the second time instant coincides with or follows the first time instant). The delay based on the interval of time indicates that there could also be other delays, such as, for example, delays due to the transmission and/or processing of the signal necessary for transmission. The terminal further comprises an estimation means (not illustrated) for estimating a reception band on the basis of the length of at least one portion of the component being processed, and wherein the length of the portion of the component is predetermined or provided to the terminal. In particular, the terminal is configured to determine or estimate the reception band of the component on the basis of a fragment of the component and the time (as measured by the terminal) necessary to receive that fragment. The length of the fragment, not being known (as it refers to an open segment), will be known to the terminal, either because it is predetermined or because it is communicated to the terminal in any manner. The band estimate can prove useful in various circumstances, as will be explained further below. Furthermore, all the considerations already set forth with reference to the method also apply for the terminal.

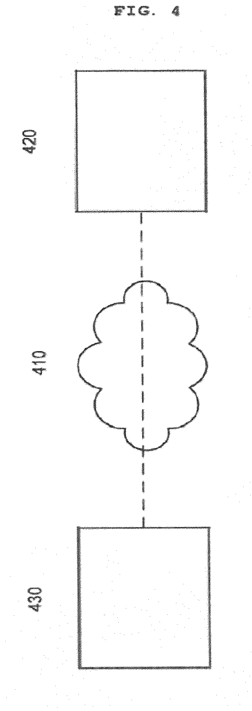

Figure 4 shows a system according to another embodiment, wherein the system comprises a supplying entity 420 as described above and a terminal 430, likewise as described above. The entity 420 and the terminal 430 can be interconnected by any fixed and/or mobile network 410.

In another embodiment, there is provided a signal for carrying a data structure comprising a response message containing a list of components related to a content item. The response message is generated in response to a message from the terminal requesting a list of components. The response is generated by the supplying entity with a delay based on an interval of time that elapses between a first time instant, at which the request arrives at the supplying entity, and a second time instant, at which the list is generated at the supplying entity.

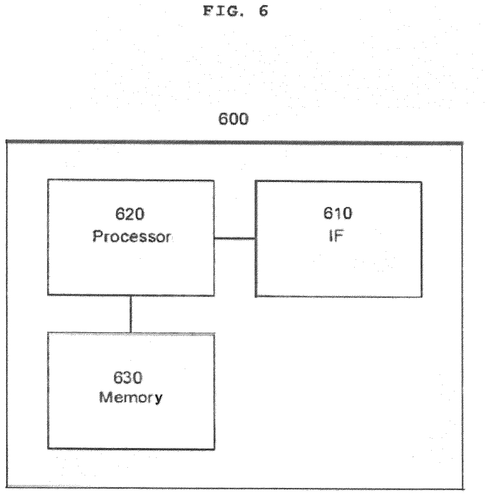

According to another embodiment, there is provided a processor program configured to execute, when the program is run on a computer, any step or combination of steps of the method and the variants thereof as described with reference to the first embodiment. Figure 6 illustrates a block diagram exemplifying a computer 600 capable of executing the aforesaid program. In particular, the computer 600 comprises a memory 630 for memorizing the instructions of the program and/or data necessary for the execution thereof, a processor 620 for executing the instructions and an input/output interface 610.

According to a further embodiment, there is provided a medium for supporting a processor program configured to execute, when the program is run on a computer, a step or combination of steps according to the method described in the first embodiment. Examples of a medium are a static and/or dynamic memory, a fixed disk or any other medium such as a CD, DVD, Blue Ray. Comprised in the medium there is also a means capable of supporting a signal representing the instructions, including a means of cable transmission (ethernet, optical, etc....) or wireless transmission (cellular, satellite, digital terrestrial transmission, etc....).

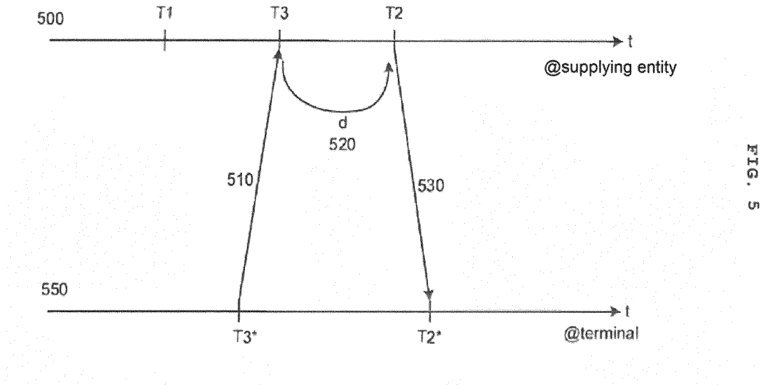

Figure 5 schematically illustrates the exchange of messages requesting a list and the corresponding response according to the present invention. In particular, the horizontal axis at the top shows the times as measured by the supplying entity, whereas the horizontal axis at the bottom shows the times as measured by the terminal. The supplying entity generates a first list at the time T1 and a second list afterwards at the time T2. The interval of time between T1 and T2 is an interval that is controllable, for example by the supplying entity. In fact, controllable implies that the interval can be predefined as constant or not constant, and variable as long as it remains under the control of the supplying entity. The terminal generates, at the time T3*, a request for a list; the request is received by the supplying entity at the time T3, after the time T3*, because of the delay due to transmission (processing and/or propagation). It is noted that the time T3 follows T1 and precedes T2. At this point, the supplying entity could send, in response, the list generated at the time T1. However, as explained above, the supplying entity delays the sending of the response at least until the time T2, i.e. until the new second list is generated at the time T2. The list is thus received at the terminal at the time T2*, which is thus aligned with the supplying entity in relation to the generation of the new list (unless there are delays due to processing, transmission and/or propagation of the signal). The delay d (reference 520 in the figure) indicates the time in which a client is placed on hold during the synchronization phase (for example, the first time a user requests a manifest, or when a user is no longer aligned within certain tolerances and/or when he/she requests a manifest in order to realign).

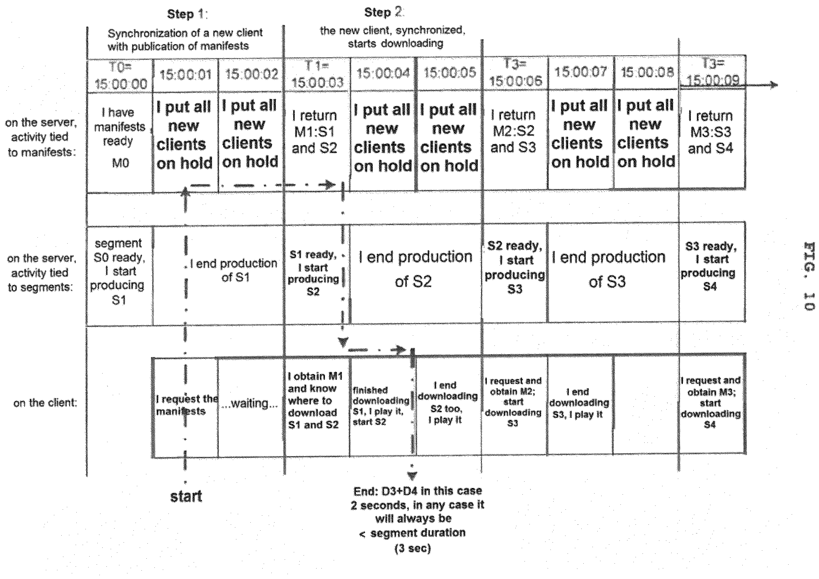

Reference will now be made to figure 10 (noting that the times are not necessarily tied to those of figure 5), which illustrates a particular example based on the teachings disclosed above. In particular, the activities carried out on the server with reference to generation are schematically shown at the top of the figure; whereas the activities related to the processing of the segments, again on the server side, are shown in the middle of the figure; finally, the activities on the terminal side with reference to the lists and segments are shown at the bottom of the figure.

In the example it is assumed that each segment lasts 3 seconds, and that the terminals take one second to download it. The lists subsequently generated are indicated as M0, M1, M2, ...; the generation thereof takes place at the instants T1, T2, T3, respectively (in the example they are spaced equally apart, but the same applies for irregular intervals). More specifically, the instants T1, T2, T3 can be defined by regular or irregular intervals, where such intervals are controllable, for example, by the supplying entity. The publication of the list is an example of generation, and in fact comprises making the list available so as to be included in the response to terminals. The segments processed in succession are indicated, by contrast, as S0, S1, S2 (it is not ruled out that two or more segments may be processed in parallel or partially in parallel according to the type of starting video, in particular if not live, and of the available hardware/software resources). A logical path illustrating the steps necessary (to the terminal) for obtaining the first segment necessary to the terminal for beginning the playback of the content is indicated with a dash-dot line. Furthermore, the parts of the diagram with a grey background relate to activities relevant for the new terminal that wants to start viewing certain content.

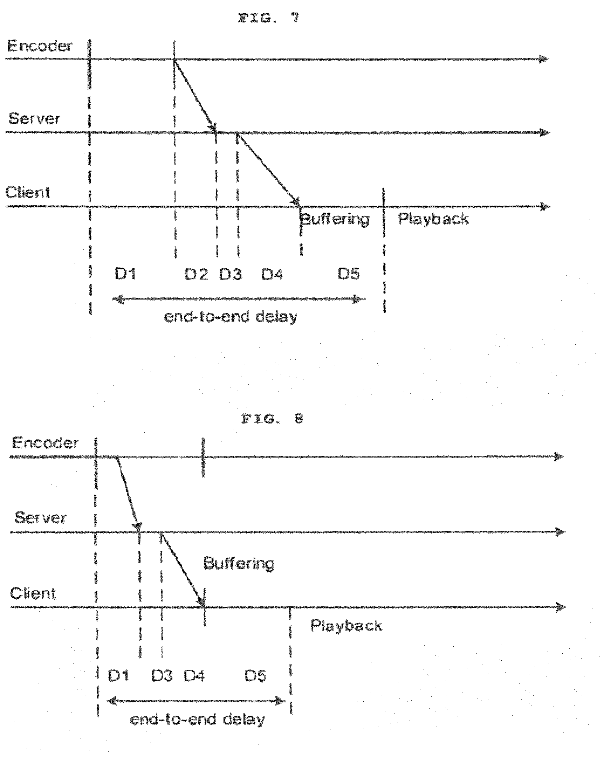

As can be seen from the figure, at the time T0 the server has prepared the list M0 (also indicated as manifest in the figure) and also completed the production and processing of the segment S0, whilst it is starting to produce the segment S1. In the example, the generation of the list M0, completion of the segment S0 and start of processing of the segment S1 can take place indistinctly at any instant comprised in the intervals represented by the respective block. These details are omitted, as the person skilled in the art would immediately understand that such instants need not necessarily be synchronized with each other; they can likewise vary according to the underlying coding. It is assumed at this point that a new terminal requests a list at the instant 15:00:01.05, i.e. in the midst of the block indicated as 15:00:01. Since the server has placed all of the clients/terminals on hold, in the sense that in this step a request for a manifest is not fulfilled but placed on hold, precisely, until the server determines that the list M1 is ready (noting that for a previously aligned or synchronized manifest this cannot occur, in the sense that it requests and obtains segments at the appropriate instants); the list M1 is ready when the production of the segment S1 is completely terminated (i.e. when the segment is closed) and/or when the production of the segment S2 has begun. The list M1 will thus include a reference to S1 and a reference to the open list S2 (as observed above, however, the list M1 can also comprise only one of these). At this point, the terminal receives the list M1 and will know where to download both the segment S1 and the segment S2. The terminal will then proceed to download the segment S1, which can be downloaded in its entirety, being a closed segment; in the example this operation lasts 1 second. The terminal can also decide at this point to begin playing it, which will enable it to have a buffer, in the example, of at least 3 seconds. Once the download of the segment S1 is completed, the terminal can begin downloading the second open segment S2, for example by means of chunked transfer encoding according to the protocol http 1.1, or else the terminal can begin downloading fragments of the open segment S2 as they are made available on the server. The downloading of the fragments of the segment S2 can begin as soon as the closed segment S1 has been downloaded, and therefore while the segment S1 is still being played (but also in parallel, if two physical or logical connections are allowed). The segment S1 could in theory be omitted, or the size thereof reduced or increased as desired in order to decrease or vary the buffer size during playing. Its presence, in addition to increasing or enabling adjustment of the buffer, also makes it possible to estimate the band in order to be able to react (e.g. change the layer/resolution, see above) at the time of beginning to download the fragments of the segment S2. Likewise, estimating the band on the fragments of the segment S2 makes it possible to be able to react sufficiently in advance, that is, either by changing the layer within the list or changing the communication channel according to need. As can be seen from the figure, as soon as it has connected to the server the terminal will receive the list with a certain delay, but will be capable of playing the content with a smaller delay since from now on it will be aligned with the emission of the manifest. This part of the delay therefore becomes controllable; furthermore, this means a reduction in the overall latency as illustrated with reference to figure 8.

Furthermore, if a number of users are tuned in, even if they should (as happens in practice) connect at different time instants, they will receive the manifests in a substantially aligned manner.

Several differences compared to known techniques, as recognized by the inventors, are illustrated below. With reference to figure 7, let us take, for example, the case of the standard HLS protocol. The encoder acquires and encodes the video; after 10s (delay D1 in the figure) a file .ts is created and loaded on the server of origin (delays D1 and D2). The client (e.g. the tablet receiving OTT services, of which Sky Go represents an example) cannot access the video segment until the latter is completely uploaded on the server; this therefore introduces 10s of latency (D1), to which we may add the time of uploading to the server (D2). Further time passages must however be taken into account: (i) the encoder-client misalignment (delay D3), i.e. the fact that the client does not request the segment exactly at the elapsing of the 10s but can also request it before or after (in a random manner, from the point of view of the server), and (ii) the time of downloading to the client (delay D4).

At the end of the chain we must also add the buffering activity performed by the client (i.e. the tablet), which in the case of use of the HLS protocol is equal to the duration of at least 2 segments (delay D5). Latency can be reduced by reducing the size of the segment (the smaller the segment being "processed", the less time will be necessary to distribute the content). However, in the traditional technique, segments lasting less than 10s (as in the example just mentioned) are not used. It should also be noted that an excessive reduction in the size of the video segment can reduce the quality of compression (encoding). Furthermore, if the video segments are of a reduced duration, the number of requests from the client to the server will increase, so that the latter will be overloaded with a larger number of requests (for example, if the video stream of a football match is divided into 1,000 segments of 10s, every client will query the server 1,000 times; if the same video stream is divided into 2,000 segments of 5s, every client will query the server 2,000 times). The use of known techniques leads in fact to high latencies. Indeed, whereas the transmission of a content item (for example live) via satellite has an average delay of 5s, the transmission of the same content live in OTT has an average delay of 30s.

Illustrated below is a specific example that implements various aspects of the invention, whose delays will then be illustrated with reference to figure 8 in order to compare them with those of figure 7. In particular, according to this non-limiting example of what was previously described, the following measures are implemented in combination (though each of these on their own or a sub-combination thereof may likewise be applied):
(A) when the client requests a content item, the server supplies an XML file, or so-called "manifest" (the manifest being an example of a list described above). The manifest contains the list of available segments (i.e. already created and uploaded to the server). Traditionally, the manifest indicates the latest available segments but does not indicate the segment being processed. In the present case, besides the latest available segments, the manifest also lists the subsequent segment that is being processed (i.e. which is being created on the server). This means that the client can also start downloading the segment being processed.
(B) The second measure used envisages "client synchronization". Clients request the manifest file at a given moment, when they choose, and normally obtain it at any time, irrespective of moment of creation thereof on the server (generating a delay due to the non-synchrony). In the present case, the client will obtain the manifest file only upon the generation of the next manifest so that it will be, from that moment on, aligned with the generation of the manifests and of the segments on the server, also if the new segment will be available after n seconds. This makes it possible, also as explained above, to establish a control of latency, and possibly of decreasing it overall.
(C) the third measure enables the client to access segments on the server also if they have not been completely uploaded to the server (i.e. if 5s of a 10s segment are available on the server, the client can already start downloading the segment before the whole 10s are available on the server).
(D) the fourth measure is aimed at resolving the management of the adaptive bit rate on the client side. The client is normally capable of understanding the available band, where the segment size is known, and calculating the time of transfer of the segment, so that the client is capable of identifying which video layer (see what has been said in this regard) to use at a given moment. In the present case it would be difficult to calculate the available band because the client does not know the size of the data portion being transferred. In order to resolve the problem and be able to manage the adaptive bit rate in the case of streaming of "open" segments (i.e. not yet completely uploaded on the server), as described above, the terminal estimates the band based on knowledge of the length or size of a part of the segment (fragment) and/or segment; the terminal acquires knowledge of this size either because it is pre-established or agreed on, or because it is informed accordingly.

The above-mentioned measures can be also indicated as follows:
1. Generation of the "look-ahead" manifest
2. Synchronization of the client to the timing of emission of the manifest
3. Management of the segments in HTTP 1.1 chunked coding
4. Management of the ABR multiplayer on the client side.

In order to further detail the example, the following is noted with reference to points (1) and (2), i.e. regarding the creation of a look-ahead manifest (1) and the synchronized sending thereof (2).

The manifest can be created with two segments referenced within it, the first of which is the one already created, whilst the second is the one still being processed ("look-ahead"), but which can in any case be downloaded by the clients thanks, for example, to the chunked encoding technique. Here is the example in further detail:
- at the time instant t0, when the creation of segment#1 ends and that of segment#2 begins, a manifest is sent which references both segment#1 and segment#2; the client can also start downloading the first fragments of segment#2, so the latency due to D1 is reduced;
- at the next instant t1, equal to t0 plus the duration of a segment, when the creation of segment#2 ends, that of segment#3 begins; a manifest is sent which references segment#2 and segment #3.

The example above also envisages the synchronization of the reception of the manifest by the client, so as also to reduce D3: the manifest is made available to clients only at the moment in which it is created by the server; if a client requests it at another instant, the server will not return it until the next update.

Using these techniques and with 2-second segments, the delay thus appears limited:
D1 < 0.5s, D2 negligible, D3 negligible, D4+D5 = ~3-4S.

Therefore, the delay is equal to about 3.5-4.5s.

Other details will now be discussed with reference to point (3) above, indicated with reference to the example, that is, with reference to sending in http 1.1 using chunked transfer encoding. Part of the latency ascribable to the standard HTTP live streaming techniques is tied to the management of the segments as single indivisible files. Therefore, instead of waiting for the formation of a 10s segment, it would be better to send the segment immediately over the server and make it available for downloading even if the segment has not yet been completely formed. This system would allow the delay time D1 to be reduced virtually to 0 (or nearly). It is possible to obtain this result using the Http 1.1 "chunked encoding" mode (method envisaged by the Http 1.1 standard). In this mode the size of the portion of the segment transfer with Http is not specified, but the transfer takes place in "open" chunks (i.e. fragments), portions of data that can be any fraction whatsoever of the original segment. Depending on the container (or streaming protocol) used (fMP4 in the case of HDS, SS, DASH or .ts as in the case of HLS, DASH) the division of the data portions takes place on the basis of a different transmission unit in the case of different containers. Using this approach, the time diagram is shortened as illustrated in figure 8. The time D1 becomes independent of the segment size and can be assumed to be decreased in a simple manner to around half a second. The delay D2 practically disappears or becomes negligible. What remains is D3, which can indeed become more critical in proportion and require a greater synchronization between client and encoder, and, finally, the buffer, which cannot be compressed beyond a certain degree for the reasons discussed in the previous section. However, D3 can be reduced, and kept under control, thanks to the technique described above, whereby the manifest is sent with a delay in order to align it with the moment of its generation. It is noted that, once the client is synchronized, it is expected that the next times the client will request the manifest in (from an engineering standpoint nearly perfect) synchrony with the creation thereof on the server. Assuming fragments of 500ms, we can estimate the pre-buffering latency on the client side to be about 2s. This would lead to a final latency of around 7-8s. The delays D4 and D5 introduced by the downloading of the data and the client buffer are not considered in the solution.

It should be noted that in figures 7 and 8 the following delays D1-D5 are indicated:
D1 creation of the segment
D2 sending of the segment over the server
D3 misalignment between when the fragment is created and when it is requested by the client
D4 download time
D5 buffering on the client

A comparison of figures 7 and 8 reveals that it is possible to control the latency and likewise to reduce it.

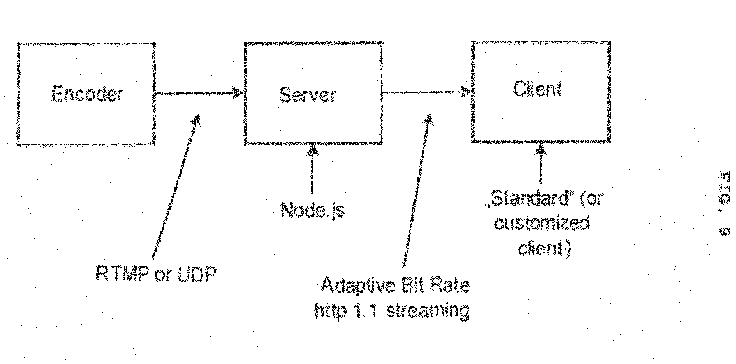

From an architectural viewpoint, see figure 9, such an approach can be implemented by connecting the encoder to the server with a minimum latency connection (for example RTMP). The server will thus receive the continuous real-time stream from the encoder, and respond to the client by creating and delivering the segments in one portion of data at a time: the time D2 is thereby reduced.

With reference to the ABR multiplayer management on the client side, the transfer of the open segment takes place in small fragments (bursts) of consecutive data of a known size to enable a measurement of the band. The fragment need not necessarily coincide with a chunk, or with a GOP, as already explained. This solution could require a customization of the player on the client side.

Thanks to the teachings described here, it is possible to obtain a system for distributing audio/video content in http streaming with a much lower transmission latency than is currently produced, as well as to control the latency. On the basis of a prototype, it was found that, by adopting 2-second segments, a solution based on the present teachings introduces a latency of about 4-5 seconds compared to the approximately 11 sec of latency with traditional techniques.

Many of the embodiments and examples have been disclosed with reference to steps of methods or processes. However, what has been described can be also implemented in a program to be executed on a processing entity (also a distributed one) or an entity whose means are suitably configured or vice versa. As illustrated above, the entity can be implemented in a single device, via HW/SW or a combination of the latter, or in multiple interconnected units or devices (HW, SW or a combination thereof in this case as well). Furthermore, such features as the supplying entity, generating means, reception means, sending means and estimation means can be replaced, in an equivalent manner, by a supplier, a generator, a receiver, a transmitter, and an estimating unit or processor, respectively. Naturally, the description set forth hereinabove concerning embodiments and examples that apply the principles recognized by the inventors is provided solely by way of example of these principles and therefore it should not be understood as a limitation of the scope of the invention claimed herein.

Further examples of the invention are as follows:
E1. A method for delivering at least one content item by means of a supplying entity, comprising the steps of: causing the generation (S110) of at least a first list of components related to said at least one content item at a first time instant and a second list of components related to said at least one content item at a second time instant following the first time instant; causing the reception (S120), at a supplying entity, of a request, from a terminal, of a list of components related to said at least one content item at a third time instant following the first time instant;
   causing the sending (S130), in response to said request, of a response containing the second list of components not before a delay time, wherein the delay time is equal to the difference between the second time instant and the third time instant.
E2. The method according to example E1, wherein the second list of components comprises at least one component still being processed.
E3. The method according to any one of the preceding examples, wherein the terminal determines a reception band on the basis of the length of at least one portion of the component being processed, and wherein the length of the portion of the component is predetermined or provided to the terminal.
E4. The method according to any one of the preceding examples, wherein the second list of components comprises a component whose processing has been completed.
E5. The method according to any one of the preceding examples, wherein the terminal determines a reception band on the basis of the size of at least one portion of the component whose processing has been completed.
E6. The method according to any one of the preceding examples, wherein the delay time is ignored if the third time instant falls within an interval defined by the first time instant and a predetermined threshold, and wherein the response comprises at least the first list of components but not the second list of components.
E7. An entity (200) supplying at least one content item to a terminal, said entity (200) comprising:
   a generating means (210) configured to generate at least a first list of components related to said at least one content item at a first time instant and a second list of components related to said at least one content item at a second time instant following the first time instant;
   a reception means (220) configured to receive, from a terminal, a request for a list of components related to said at least one content item at a third time instant following the first time instant;
   a sending means (230) configured to send, in response to said request, a response containing the second list of components not before a delay time,
   wherein the delay time is equal to the difference between the second time instant and the third time instant.
E8. A terminal (300) for using at least one content item supplied by a supplying entity, the terminal comprising:
   a request means (310) for sending said supplying entity
   a request for at least a first content item,
   a reception means (320) for receiving a response comprising a list of components related to said content, wherein the response is received with a delay based on an interval of time between a first time instant at which the request arrives at the supplying entity and a second time instant at which the list is generated at the supplying entity,
   wherein the second time instant at which the list is generated at the supplying entity, and wherein the second time instant coincides with or follows the first time instant.
E9. The terminal (300) according to example E8, further comprising an estimation means for estimating a reception band on the basis of the length of at least one portion of the component being processed, and wherein the length of the portion of the component is predetermined or provided to the terminal.
E10. A system comprising a terminal and a supplying entity according to example E7.
E11. A signal for carrying a data structure comprising a response message containing a list of components related to a content item, the response message generated in response to a message from a terminal requesting a list of components, wherein the response is generated at the supplying entity with a delay based on an interval of time between a first time instant at which the request arrives at the supplying entity and a second time instant at which the list is generated at the supplying entity.
E12. A processor program configured to perform, when said program is run on a computer, all the steps according to any one of the method examples E1 to E6.
E13. A medium for supporting a processor program configured to perform when said program is run on a computer, all the steps according to any one of the method examples E1 to E6.

## Claims

1. A method for delivering at least one content item by means of a supplying entity, comprising the steps of:
supplying, to a terminal, at least one list of segments related to said at least one content, wherein said at least one list of segments comprises a segment that is being processed;
enabling the terminal to access said segment that is being processed, also if said segment that is being processed is not yet completely available at the supplying entity.

2. Method according to claim 1, wherein enabling the terminal to access said segment that is being processed comprises enabling the terminal to start downloading said segment that is being processed.

3. Method according to claim 1 or 2, wherein enabling the terminal to access said segment that is being processed comprises enabling the terminal to download at least a fragment of said segment that is being processed.

4. Method according to any of the preceding claims, wherein said list of segment comprises a segment that is available.

5. Method according to any of the preceding claims, wherein the segment that is being processed comprises a segment obtained by processing a starting signal representing the content to make it available in one or more formats suitable for transmission.

6. Method according to any of the preceding claims, wherein the terminal determines a reception band on the basis of the length of at least one portion of the component being processed, and wherein the length of the portion of the component is predetermined or provided to the terminal.

7. Method according to any of the preceding claims, wherein the terminal determines a subsequent segment based on said at least one list of segments and a pre-established rule.

8. Method according to claim 6, the method comprising a step of managing adaptive bit rate transmission of the content based on the determined reception band.

9. Method according to any of the preceding claims, wherein said at least one list of segments is sent with a delay that corresponds to a time when said at least one list of segments is generated.

10. An entity supplying at least one contest to a terminal, said entity comprising:
supplying means for supplying, to a terminal, at least one list of segments related to said at least one content, wherein said at least one list of segments comprises a segment that is being processed;
means for enabling the terminal to access said segment that is being processed, also if said segment that is being processed is not yet completely available at the supplying entity.

11. Terminal for using at least one content item supplied by a supplying entity, the terminal comprising:
a request means for sending said supplying entity a request for at least one content;
a reception means for receiving, from said supplying entity, at least one list of segments related to said at least one content, wherein said at least one list of segments comprises a segment that is being processed;
means for accessing said segment that is being processed, also if said segment that is being processed is not yet completely available at the supplying entity.

12. A system comprising a supplying entity according to claim 10 and a terminal according to claim 11.

13. Computer program configured to perform, when said program is run on a computer, all the steps according to any one of the method claims 1 to 9.
